# EUROPEAN PATENT APPLICATION

(11) **EP 2 958 273 A1**
(43) Date of publication of application: **23.12.2015**
(21) Application number: 14751508.4
(22) Date of filing: 12.02.2014
(51) Int. Cl.: H04L 12/28, H04B 3/54

(54) **POWER LINE CARRIER COMMUNICATION TERMINAL AND METER READING TERMINAL**

(30) Priority: 13.02.2013 JP 2013026108
(71) Applicant: Panasonic Intellectual Property Management Co., Ltd., Osaka-shi, Osaka 540-6207 (JP)
(72) Inventor: DOBASHI, Kazuo, Osaka-shi, Osaka 540-6207 (JP)
(74) Representative: Appelt, Christian W.
(86) International application number: PCT/JP2014/000723
(87) International publication number: WO 2014/125816

(57) **Abstract**

A power line carrier communication terminal includes a communicator configured to perform power line carrier communication based on ITU-T G. 9903, in accordance with G3-PLC. The communicator includes a MAC layer and upper layers. The communicator is configured, when the power line carrier communication terminal newly enters a network, so that the MAC layer provides reception of a Beacon Reply to the upper layers if the communicator receives the Beacon Reply to a Beacon Request from at least one power line carrier communication terminal which newly enters the network and includes the power line carrier communication terminal of the communicator.

## Description

### Technical Field

The invention relates to a power line carrier communication terminal configured to perform power line carrier communication that conforms to ITU-T G. 9903, in accordance with G3-PLC that is a communications protocol for power line carrier communication, and a meter reading terminal.

### Background Art

Utility such as electricity, gas, water or heat is supplied from a public utility (provider) to consumer facilities in general. In a consumer facility provided with utility, a consumption amount of the utility is checked by a meter reading device. In the public utility, a meter reader collects the readings from a meter, and a bill with respect to the consumption amount of the utility is sent to a consumer.

The collecting work by the meter reader causes problems such as labor costs and error in the readings. In order to solve the problems, there are proposed various remote meter reading systems configured to manage reading data without recourse to the meter reader.

A remote meter reading system is provided with slave terminals each of which is configured to transmit reading data of utility and is installed in a consumer facility. One master terminal is provided for the slave terminals. The master terminal is configured to collect reading data per slave terminal. A host control device managed by the public utility that provides the utility collects respective reading data via a wide area network such as Internet from master terminals provided in certain ranges inside a service area thereof.

In recent years, there is provided a remote metering system using power line carrier communication for communication between a master terminal and slave terminals (see e.g., JP Pub. No. 2012-39314). For example, mutual communication configuration based on the power line carrier communication between a master terminal and slave terminals is described in ITU-T (International Telecommunication Union Telecommunication Standardization Sector) G. 9903. In ITU-T G. 9903, G3-PLC is employed as a protocol for the power line carrier communication.

A process of new entry of a terminal into a network, in conventional power line carrier communication that conforms to ITU-T G. 9903 to be performed in accordance with G3-PLC, is now explained.

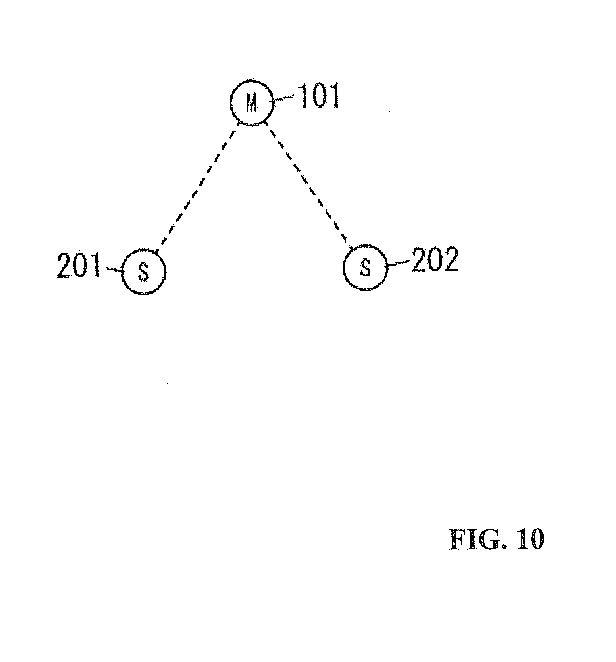

In FIG. 10, 201 and 202 are slave terminals to be newly entered into a network including a master terminal 101. In FIG. 10, broken lines to the slave terminals show communication links that are not established.

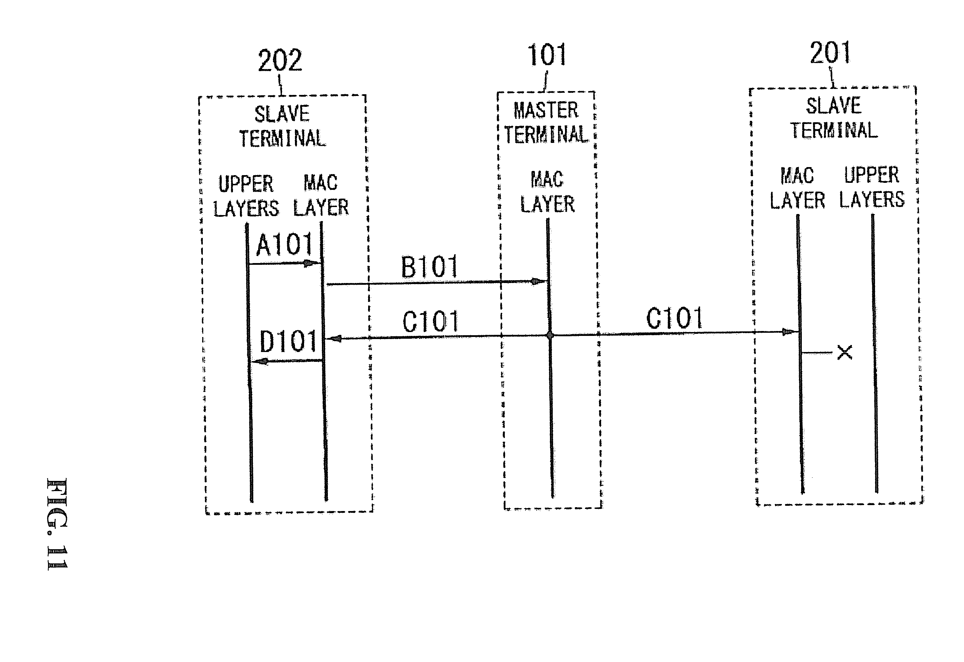

As shown in a communication sequence of FIG. 11, assuming the slave terminal 202 transmits a Scan Request A101 from upper layers to a MAC layer thereof earlier than the slave terminal 201, the slave terminal 202 broadcasts a Beacon Request B101 after the MAC layer receives the Scan Request A101.

The master terminal 101 broadcasts a Beacon Reply C101 to the Beacon Request B101. At this time, the slave terminal 201 is in non-entry into the network, and accordingly returns no Beacon Reply to the Beacon Request B101. In FIG. 10, upper layers of the master terminal 101 are omitted.

When the slave terminal 202 receives the Beacon Reply C101 to the Beacon Request B101, a Beacon Reply D101 is provided from the MAC layer to the upper layers thereof. The slave terminal 202 then transmits and receives routing packets containing information of a communication route, communication quality and the like with respect to the master terminal 101 that is a transmission source of the Beacon Reply D101. As a result, the communication route to the master terminal 101 can be established.

On the other hand, the slave terminal 201 is not in scanning because no Scan Request is provided from the upper layers to the MAC layer. The slave terminal 201 provides no Beacon Reply from the MAC layer to the upper layers thereof even if receiving the Beacon Reply C101. That is, the slave terminal 201 provides no Beacon Reply from the MAC layer to the upper layers thereof unless receiving a Beacon Reply to a Beacon Request transmitted from the slave terminal 201 after broadcasting the Beacon Request from the slave terminal 201. The slave terminal 201 cannot therefore establish the communication route unless broadcasting a Beacon Request from the slave terminal 201.

There is a following problem in communication conforming to ITU-T G. 9903, to be performed in accordance with G3-PLC as the protocol for power line carrier communication.

In order to establish a communication route to a certain master terminal, a slave terminal which newly enters a network first needs obtaining a routing packet containing information of a communication route, communication quality and the like from the master terminal and (another) other slave terminals that have(has) already entered the network. The slave terminal which newly enters the network therefore broadcasts a Beacon Request. The master terminal and other slave terminals which have received the Beacon Request broadcast respective Beacon Replies. If receiving a Beacon Reply, the slave terminal which newly enters the network establishes the communication route by receiving and transmitting a routing packet containing information of a communication route, communication quality and the like with respect to a transmission source of the Beacon Reply.

However, in a case where a large number of slave terminals try to newly enter the network, there is a possibility that communication disturbance occurs owing to packet congestion and the like because the number of Beacon Requests and Replies to be transmitted increases to cause an increase in communication traffic.

### Summary of Invention

The present invention has been achieved in view of the above circumstances, and an object thereof is to provide a power line carrier communication terminal capable of performing power line carrier communication that conforms as much as possible to ITU-T G. 9903, in accordance with G3-PLC that is a communications protocol for power line carrier communication and thereby suppressing an increase in communication traffic caused by communication for establishing communication routes during new entry into a network, as well as a meter reading terminal.

A power line carrier communication terminal of the present invention includes a communicator (1a, 2a) configured to perform power line carrier communication based on ITU-T G. 9903, in accordance with G3-PLC that is a communications protocol for power line carrier communication. The communicator (1a, 2a) includes a MAC layer (12, 212) and upper layers (15, 215). The communicator (2a of 23₁; 2a of 21₂, 2a of 22₂) is configured, when the power line carrier communication terminal (23₁; 21₂, 22₂) newly enters a network (N1), so that the MAC layer (212) provides reception of a Beacon Reply (D1, D2; D11, D12) to the upper layers (215) if the communicator receives the Beacon Reply (C1, C2; C11, C11) to a Beacon Request (B1; B11) from at least one power line carrier communication terminal which newly enters the network and includes the power line carrier communication terminal (23₁; 21₂, 22₂) of the communicator. In other words, the communicator is configured, when it has not yet entered the network, so that the MAC layer notifies reception of the Beacon Reply to the upper layers if the communicator receives the Beacon Reply regardless of whether or not the Beacon Request has been broadcast.

In an embodiment, the communicator (2a of 23₁; 2a of 22₂) is configured to broadcast a Beacon Request (B1; B11) when the MAC layer (212) receives a Scan Request (A1; All) from the upper layers (215) in a case where the power line carrier communication terminal (23₁; 22₂) of the communicator newly enters the network (N1). The communicator (2a of 21₁, 2a of 22₁; 1a of 1) is also configured to broadcast a Beacon Reply (C1, C2; C11) when receiving a Beacon Request (B1; B11) from at least one other power line carrier communication terminal (23₁; 21₂, 22₂) which newly enters the network in a case where the power line carrier communication terminal (21₁, 22₁; 1) of the communicator has already entered the network (N1).

In an embodiment, the power line carrier communication terminal (2) includes a timer (2c) configured to measure a waiting time (Tr1, Tr2, Tr3), a time length of which is set at random. The communicator (2a of 23₁; 2a of 22₂) is configured, when the power line carrier communication terminal (23₁; 22₂) of the communicator newly enters the network (N1), so that the upper layers (215) provide the MAC layer (212) with the Scan Request (A1; A11) at a timing that the waiting time (Tr3; Tr2) elapses from a start-up time point thereof.

In an embodiment, the power line carrier communication terminal (21₂) is configured, when newly entering the network (N1), to extend the waiting time (Tr1) if receiving the Beacon Request (B11) from the at least one other power line carrier communication terminal (22₂) which newly enters the network during the waiting time (Tr1) from the start-up time point.

In an embodiment, the power line carrier communication terminal (21₂) is configured to more extend an extended time (Tr11) of the waiting time (Tr1) as a number of Beacon Requests that have been received during the waiting time (Tr1) is larger.

In an embodiment, the power line carrier communication terminal (21₂) is configured, when newly entering the network (N1), to extend the waiting time (Tr1) if receiving a Beacon Reply (C11) to a Beacon Request (B11) during the waiting time (Tr1) from the start-up time from the at least one power line carrier communication terminal (22₂) which newly enters the network.

In an embodiment, the power line carrier communication terminal (21₂) is configured to more extend an extended time (Tr11) of the waiting time (Tr1) as a number of Beacon Replies that have been received during the waiting time (Tr1) is larger.

In an embodiment, the communicator (2a of 22₃) is configured, after the power line carrier communication terminal (22₃) of the communicator enters the network (N1), so that the upper layers (215) provide the MAC layer (212) with a Scan Request (A21) at regular intervals.

In an embodiment, the communicator (2a of 22₄) is configured, after the power line carrier communication terminal (22₄) of the communicator enters the network (N1), so that the upper layers (215) further provide the MAC layer (212) with a Scan Request (A31) only when the communicator detects a signal (E31) containing an identifier that is different from the network (N1) which the power line carrier communication terminal (22₄) of the communicator has entered.

A meter reading terminal (2) of the present invention includes a meter (2b) configured to produce meter reading information that represents a consumption amount of utility supplied to a consumer facility (30) from a public utility, and a communicator (2a) configured to perform power line carrier communication based on ITU-T G. 9903, in accordance with G3-PLC that is a communication protocol for power line carrier communication and thereby to transmit the meter reading information. The communicator (2a of 23₁) includes a MAC layer (212) and upper layers (215). The communicator (2a of 23₁; 2a of 21₂, 2a of 22₂) is configured, when the meter reading terminal (23₁; 21₂, 22₂) newly enters a network (N1), so that the MAC layer (212) provides reception (D1, D2; D11, D12) of a Beacon Reply to the upper layers (215) if receiving the Beacon Reply (C1, C2; C11, C11) to a Beacon Request (B1; B11) from at least one meter reading terminal which newly enters the network and includes the meter reading terminal (23₁; 21₂, 22₂) of the communicator.

As stated above, the present invention can suppress an increase in communication traffic caused by communication for establishing comnunication routes when power line carrier communication terminals newly enter a network, by performing power line carrier communication that conforms as much as possible to ITU-T G. 9903, in accordance with G3-PLC that is a communication protocol for power line carrier communication.

### Brief Description of Drawings

Preferred embodiments of the invention will now be described in further details. Other features and advantages of the present invention will become better understood with regard to the following detailed description and accompanying drawings where:
FIG. 1 is a block diagram of a slave terminal for a power line carrier communication terminal and a meter reading terminal, in accordance with an embodiment of the present invention;
FIG. 2 is a block diagram of a network including a master terminal and slave terminals in the embodiment;
FIG. 3 is a block diagram of the master terminal in the network;
FIG. 4 is a schematic diagram of an example of the network;
FIG. 5 is a sequence diagram showing communication when one slave terminal newly enters the network in FIG. 4;
FIG. 6 is a schematic diagram of another example of the network;
FIG. 7 is a sequence diagram showing communication when the slave terminals newly enter the network in FIG. 6;
FIG. 8 is a sequence diagram showing communication of a slave terminal after entering a network in an embodiment;
FIG. 9 is a sequence diagram showing communication of slave terminals after entering a network in an embodiment;
FIG. 10 is a block diagram of a conventional system; and
FIG. 11 is sequence diagram showing communication when a slave terminal newly enters a network in FIG. 10;

### Description of Embodiments

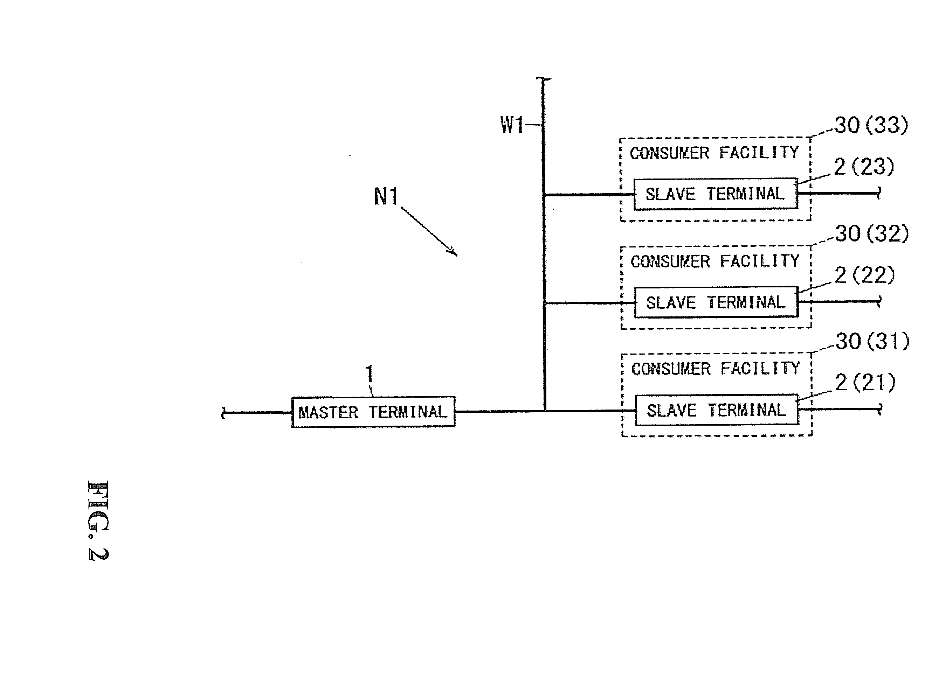

As shown in FIG. 2, a power line carrier communication system according to a present embodiment includes a master terminal 1 and slave terminals 2 (21, 22, 23, ...), each of which is connected to an electric power line W1 through which electricity is provided from a public utility to a consumer facility. The master terminal 1 is, e.g., a concentrator and each slave terminal 2 is, e.g., a meter reading terminal such as a smart meter. Each of the master terminal 1 and the slave terminals 2 is a power line carrier communication terminal configured to perform power line carrier communication based on ITU-T G. 9903, in accordance with G3-PLC that is a communications protocol for power line carrier communication. The slave terminal 2 as a meter reading terminal is especially configured to produce meter reading information that represents a consumption amount of utility provided to the consumer facility 30 from the public utility, and perform power line carrier communication based on ITU-T G. 9903, in accordance with G3-PLC and thereby to transmit the meter reading information. The master terminal 1 and the slave terminals 2 constitute a network N1 for performing mutual power line carrier communication via the electric power line W1. In the embodiment, the master terminal 1 and the slave terminals 2 constitute a multihop communication network. In the multihop communication network, a data packet is transmitted from a source node to a destination node via variable relay node therebetween.

The slave terminals 2 (21, 22, 23, ...) are individually installed in consumer facilities 30 (31, 32, 33, ...). For example, the slave terminals 21, 22, 23, ... are installed in respective corresponding consumer facilities 31, 32, 33, .... Each slave terminal 2 is configured to produce meter reading data by measuring a consumption amount of electricity in a corresponding consumer facility 30 at regular intervals. One master terminal 1 is provided for slave terminals 2. The master terminal 1 is configured to obtain meter reading data of each of the slave terminals 2. A host control device that is managed by an electric power company as a public utility is configured to collect meter reading data via a wide area network such as Internet from each of master terminals 1 that are provided per section in a supply area.

In a network N1 constructed of one master terminal 1 and slave terminals 2, when the master terminal 1 cannot directly communicate with some slave terminals 2, multihop communication that allows the master terminal 1 to communicate with each slave terminal 2 is performed by using one or more other slave terminals 2 for relay.

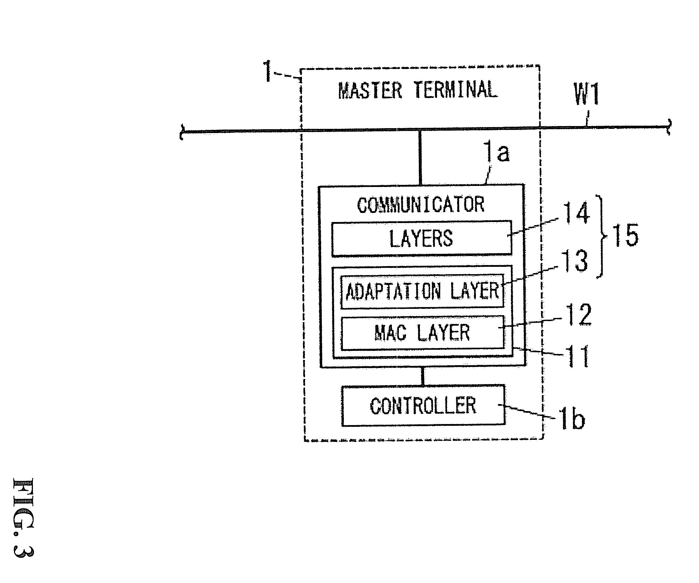

As shown in FIG. 3, the master terminal 1 includes a communicator 1a and a controller 1b. The communicator 1a has a protocol stack formed of layers including a MAC (Media Access Control) layer 12 and upper layers 15. The communicator 1a is configured to transmit a packet(s) over the electric power line W1 and also to detect a packet(s) from the electric power line W1 to receive a packet(s) addressed to the master terminal 1. The controller 1b is configured to control packet communication through the communicator 1a and the like.

In an example, the upper layers 15 of the communicator 1a are configured to include at least an adaptation layer. Specifically, in ITU-T G. 9903, the MAC layer 12 is a lower sublayer of a Data link layer 11 (a MAC sublayer) based on IEEE 802.15.4 and constitutes the Data link layer 11 along with an adaptation sublayer 13 that is an upper sublayer of the Data link layer 11.

In the embodiment, the upper layers 15 of the communicator 1a includes not only the adaptation sublayer 13 but also layers 14 higher than the Data link layer 11 (e.g., a network layer and the like). For example, the communicator 1a is configured to transmit, over the electric power line W1, a signal (a frame) containing data that are obtained from the controller 1b and provided by the upper layers 15, and also to detect a signal (a frame) from the electric power line W1 to provide the controller 1b with the data contained in a frame through the upper layers 15 if the frame is a frame addressed to the master terminal 1. The controller 1b is configured to control signal communication through the communicator 1a and the like to perform data exchange between the master terminal 1 and each slave terminal 2 (each meter reading terminal).

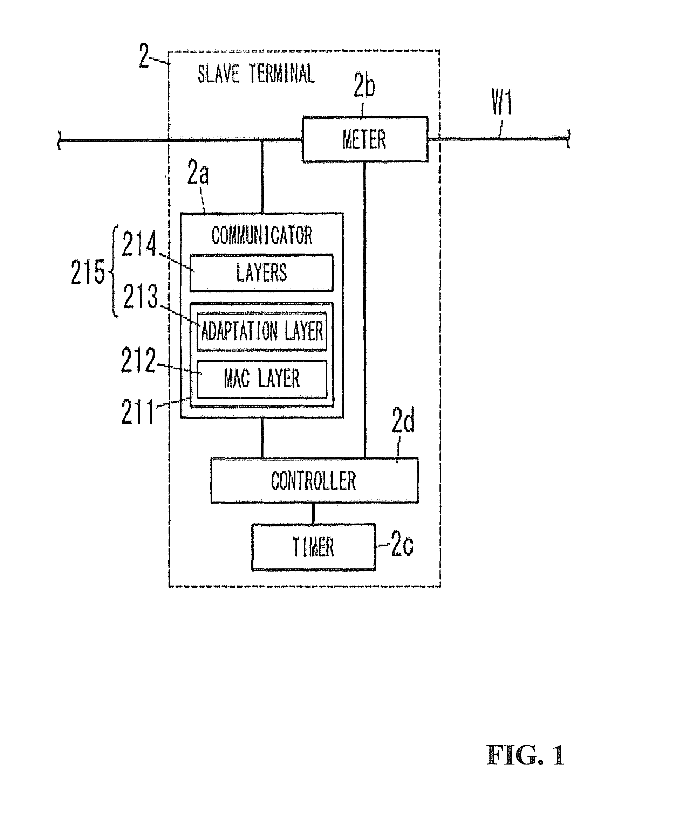

As shown in FIG. 1, each of the slave terminals 2 includes a communicator 2a, a meter 2b, a timer 2c and a controller 2d, and corresponds to a meter reading terminal of the invention. The controller 2d is configured to perform data exchange with each of the communicator 2a, the meter 2b and the timer 2c in the slave terminal 2 having the controller 2d. In each slave terminal 2, a controller 2d thereof corresponds to each of a communicator 2a, a meter 2b and a timer 2c thereof. In FIG. 1, the communicator 2a has a protocol stack formed of layers including a MAC layer 212 and upper layers 215. The communicator 2a is configured to transmit a packet(s) over the electric power line W1, and also to detect a packet(s) from the electric power line W1 to receive a packet(s) addressed to the slave terminal 2 having the communicator 2a. The meter 2b is configured to measure a consumption amount of electricity in a corresponding consumer facility 30 to produce meter reading data. The timer 2c is configured to perform a time measuring operation for communication control. The controller 2d is configured to perform packet communication control through a corresponding communicator 2a, meter reading control through a corresponding meter 2b, time measuring control through a corresponding timer 2c and the like.

In an example, the upper layers 215 of the communicator 2a are configured to include at least an adaptation layer. Specifically, the MAC layer 212 is a lower sublayer of a Data link layer 211 and constitutes the Data link layer 211 along with an adaptation sublayer 213 that is an upper sublayer of the Data link layer 211.

In the embodiment, the upper layers 215 includes not only the adaptation sublayer 213 but also layers 214 higher than the Data link layer 211 (e.g., a network layer and the like). For example, the comnunicator 2a is configured to transmit, over the electric power line W1, a signal (a frame) containing data that are obtained from a corresponding controller 2d and provided by the upper layers 215, and also to detect a signal (a frame) from the electric power line W1 to provide the corresponding controller 2d with the data contained in a frame through the upper layers 215 if the frame is a frame addressed to the slave terminal 2 having the communicator 2a. The meter 2b is configured to measure a consumption amount of electricity in a corresponding consumer facility 30 at regular intervals to produce meter reading data and then to provide the meter reading data to the corresponding controller 2d. The timer 2c is configured to provide the corresponding controller 2d (specifically, the communicator 2a via the controller 2d) with timer information (e.g., timing information) obtained by performing time measuring operation for communication control. The controller 2d is configured to perform data exchange between the slave terminal 2 having the controller 2d and the master terminal 1 by performing signal comnunication control through a corresponding communicator 2a based on data obtained from each of the meter 2b and the timer 2c.

A system operation when a slave terminal 2 newly enters the network N1 will be hereinafter explained.

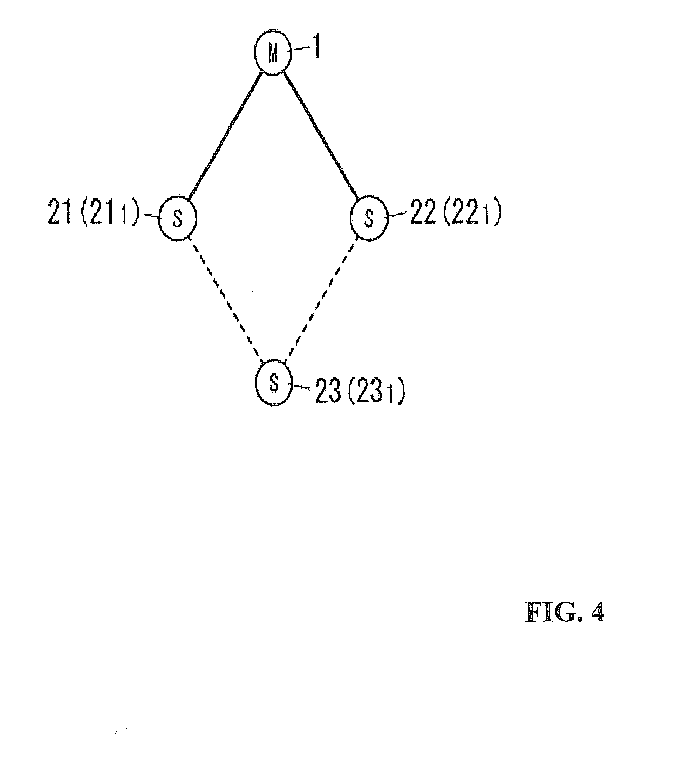

In an example of FIG. 4, communication routes have been already established between the master terminal 1 and each of slave terminals 21(21₁) and 22(22₁), and the master terminal 1 and the slave terminals 21 and 22 constitute one network N1. In FIG. 4, each solid line between nodes shows a communication link that has been already established, and each broken lines shows a communication link that has not been yet established.

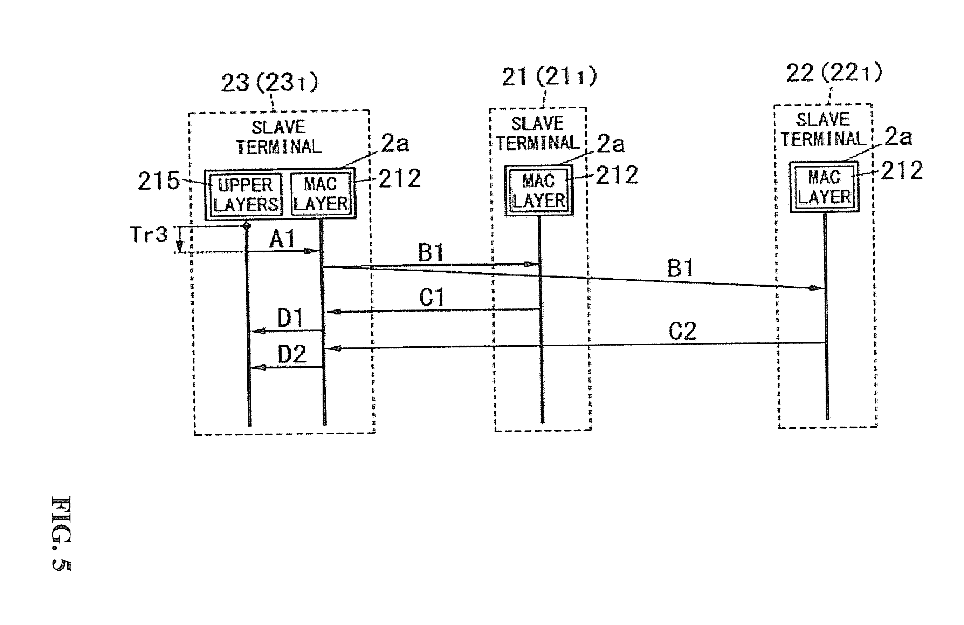

A slave terminal 23(23₁) has not yet established a communication route between the slave terminal 23₁ and the master terminal 1, and has not yet entered the network N1. As shown in a communication sequence of FIG. 5, in a communicator 2a of the slave terminal 23₁, upper layers 215 provide a MAC layer 212 with a Scan Request A1 when the slave terminal 23₁ newly enters the network N1. If the MAC layer 212 receives the Scan Request A1, the communicator 2a of the slave terminal 23₁ broadcasts a Beacon Request B1 over the electric power line W1. In FIG. 5, upper layers in each of the slave terminals 21 and 22 are omitted.

In the embodiment, a timer 2c of each slave terminal 2 is configured to measure time from a start-up time point of a slave terminal 2 having the timer 2c and to provide a corresponding communicator 2a with timing when the time measured from the start-up time point reaches a waiting time. In the embodiment, the timing is provided to the communicator 2a through a corresponding controller 2d. A timer 2c of each slave terminal 2 is configured to provide a corresponding communicator 2a with timing when the time measured from the start-up time point reaches a waiting time that is set at random. A communicator 2a of each slave terminal 2 is configured so that a Scan Request A1 is provided from upper layers 215 to a MAC layer 212 of the communicator 2a at timing when the time measured with a corresponding timer 2c reaches the waiting time.

In an example of FIG. 5, a timer 2c of the slave terminal 23₁ that tries to newly enter the network N1 starts an time measuring operation for a waiting time Tr3 from a start-up time point of the slave terminal 23₁. In the communicator 2a of the slave terminal 23₁, the Scan Request A1 is then provided from the upper layers 215 to the MAC layer 212 of the slave terminal 23₁ at timing when the time measured with the timer 2c of the slave terminal 23₁ reaches the waiting time Tr3. In the example of FIG. 5, one slave terminal 23₁ newly enters the network N1. Each of the slave terminals 2 (e.g., timer 2c or controller 2d) may set a time length of its own waiting time at random in view of two or more slave terminals 2 newly entering the network N1. In this case, even when the two or more slave terminals 2 are activated at the same time, it is possible to reduce a probability that two or more slave terminals 2 generate their Scan Requests at the same time. As a result, packet congestion caused by two or more slave terminals 2 broadcasting their Beacon requests at the same time can be prevented. In an example, each slave terminal 2 (e.g., timer 2c or controller 2d) may be configured to set a time length of its own waiting time at random every time measuring operation with respect to the waiting time.

In the example of FIG. 5, when the slave terminals 21₁ and 22₁ receive the Beacon Request B1, the communicators 2a of the slave terminals 21₁ and 22₁ broadcast Beacon Replies C1 and C2 to the Beacon Request B1 over the electric power line W1, respectively.

When the communicator 2a of the slave terminal 23₁ receives the Beacon Reply C1, reception D1 of the Beacon Reply is provided to the upper layers 215 from the MAC layer 212 of the slave terminal 23₁. Subsequently, when the communicator 2a of the slave terminal 23₁ receives the Beacon Reply C2, reception D2 of the Beacon Reply is provided to the upper layers 215 from the MAC layer 212 of the slave terminal 23₁. The communicator 2a of the slave terminal 23₁ then transmits and receives routing packets, each of which contains information of a communication route, communication quality and the like, with respect to each of the slave terminals 21₁ and 22₁ that are transmission sources of the Beacon Replies C1 and C2. The communicator 2a of the slave terminal 23₁ establishes a communication link with at least one of the slave terminals 21₁ and 22₁. Thus, the slave terminal 23₁ can establish the communication route to the master terminal 1.

Specifically, when receiving the Beacon Replies C1 and C2, the communicator 2a of the slave terminal 23₁ determines the master terminal 1 in the network N1 based on respective cost information contained in the Beacon Replies C1 and C2 and transmits a Join Request to the master terminal 1. The communicator 2a of the slave terminal 23₁ then determines an address to be used when receiving a Reply returned from the master terminal 1, and performs route construction by transmitting (a) routing packets. A slave terminal that transmits a Beacon Reply knows a route to the master terminal 1. Therefore, when the communicator 2a of the slave terminal 23₁ transmits the Join Request, if the communicator transmits the Join Request to a slave terminal that has transmitted the Beacon Reply, the Join Request is to be transferred from the slave terminal, which has transmitted the Beacon Reply, to the master terminal 1. This is a temporary route. Subsequently, the communicator 2a of the slave terminal 23₁ performs packet exchange such as Hello and thereby constructs a route at regular intervals for change to better route or in response to a change in comnunication environment.

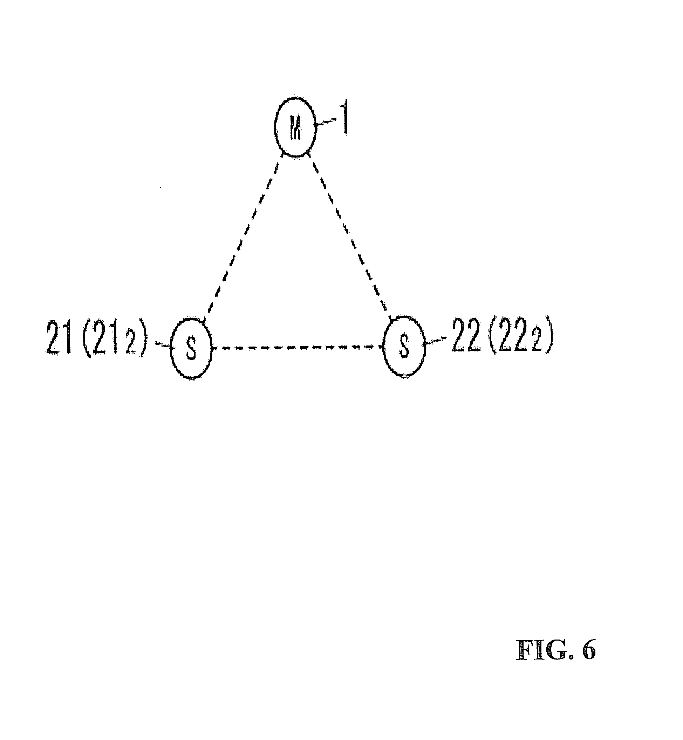

In an example of FIG. 6, a network N1 includes a master terminal 1 and at least one slave terminal 2 (not shown), and slave terminals 21(21₂) and 22(22₂) which newly enter the network are disposed in the network N1. In FIG. 6, each broken line between nodes shows a communication link that has not been yet established.

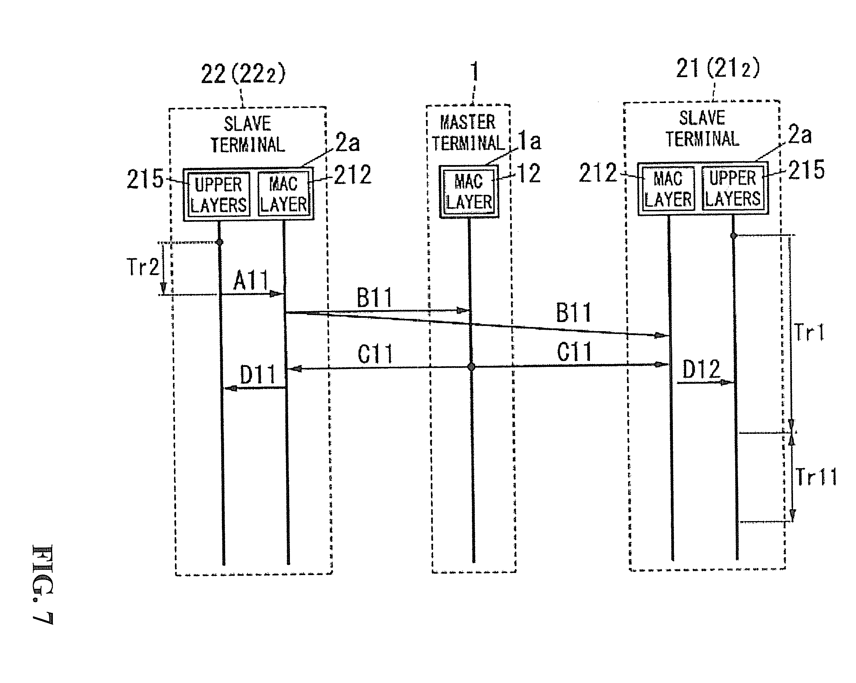

As shown in a communication sequence of FIG. 7, in a case where a waiting time Tr2 of the slave terminal 22(22₂) is shorter than a waiting time Tr1 of the slave terminal 21(21₂), a communicator 2a of the slave terminal 22₂ operates earlier than the slave terminal 21₂, and a Scan Request A11 is provided from upper layers 215 to a MAC layer 212 of the slave terminal 22₂. If the MAC layer 212 receives the Scan Request A11, the communicator 2a of the slave terminal 22₂ broadcasts a Beacon Request B11 over the electric power line W1.

A communicator 1a of the master terminal 1 then broadcasts a Beacon Reply C11 to the Beacon Request B11 over the electric power line W1. In this case, the slave terminal 21₂ returns no Beacon Reply to the Beacon Request B11 because it has not yet entered the network N1. In FIG. 7, upper layers of the master terminal 1 are omitted.

When the communicator 2a of the slave terminal 22₂ receives the Beacon Reply C11 to the Beacon Request B11, reception D11 of the Beacon Reply is provided from the MAC layer 212 to the upper layers 215 of the slave terminal 22₂. The communicator 2a of the slave terminal 22₂ can construct a communication route by transmitting and receiving routing packets, each of which contains information of a communication route, communication quality and the like, between the slave terminal 22₂ and the master terminal 1 that is a transmission source of the Beacon Reply C11.

Specifically, the communicator 2a of the slave terminal 22₂ transmits a Join Request to the master terminal 1 that is a transmission source of the Beacon Reply C11 to enter the network, and subsequently performs route construction and maintenance by exchanging routing packets.

On the other hand, because no Scan Request is provided from upper layers 215 to a MAC layer 212 of the slave terminal 21₂, the communicator 2a of the slave terminal 21₂ is not in a scanning state. Therefore, if ITU-T G. 9903 is exactly applied, reception of the Beacon Reply C11 is not provided from the MAC layer 212 to the upper layers 215 of the slave terminal 21₂ even if the communicator 2a of the slave terminal 21₂ receives the Beacon Reply.

However, each slave terminal 2 according to the embodiment is configured, when receiving a Beacon Reply (a Beacon Reply caused by another slave terminal 2) to a Beacon Request transmitted from another slave terminal 2 which newly enters the network even if it is not in a scanning state, so that reception of the Beacon Reply is provided from a MAC layer 212 to upper layers 215 of the slave terminal 2. That is, when each slave terminal 2 receives a Beacon Reply regardless of whether or not it is in a scanning state, reception of the Beacon Reply is provided from a MAC layer 212 to upper layers 215 thereof. In an example of FIG. 7, when the comnunicator 2a of the slave terminal 21₂ receives the Beacon Reply C11 to the Beacon Request B11, reception D12 of the Beacon Reply is provided from the MAC layer 212 to the upper layers 215 of the slave terminal 21₂. In short, as shown in FIGS. 4 to 7, each communicator 2a is configured, when a slave terminal 2 having the communicator 2a newly enters the network N1, so that reception of a Beacon Reply is provided from a MAC layer 212 to upper layers 215 of the communicator 2a if receiving the Beacon Reply to a Beacon Request from at least one slave terminal 2 which newly enters the network and includes the slave terminal 2 having the communicator 2a.

Thus, the communicator 2a of the slave terminal 21₂ can construct a communication link with the master terminal 1 that is a transmission source of the Beacon Reply C11, and a communication route to the master terminal 1. That is, when newly entering the network N1, the communicator 2a of the slave terminal 21₂ can construct a communication route between the slave terminal 21₂ and the master terminal 1, without transmission of any Beacon Request by the slave terminal 21₂, based on the Beacon Reply C11 to the Beacon Request B11 transmitted from another slave terminal 22₂ which newly enters the network. Each slave terminal 2 can therefore perform power line carrier communication that conforms as much as possible to ITU-T G. 9903, in accordance with G3-PLC that is the communications protocol for power line carrier communication and thereby suppress an increase in communication traffic caused by communication for establishing communication routes when two or more slave terminals 2 newly enter the network N1.

An object of a slave terminal 2 according to the embodiment is to perform the power line carrier communication that conforms as much as possible to ITU-T G. 9903 and thereby to suppress an increase in communication traffic when two or more slave terminals 2 newly enter the network N1. That is, the slave terminal 2 according to the embodiment differs from ITU-T G. 9903 in that when a slave terminal 2 (21₂) which newly enters the network N1 receives a Beacon Reply C11 caused by another slave terminal 2(22₂) which newly enters the network, reception of the Beacon Reply is provided from the MAC layer 212 to the upper layers 215 of the slave terminal 2(21₂) even if the slave terminal 2(21₂) is not in a scanning state.

In a case where the communicator 2a of the slave terminal 21₂ cannot construct the communication route between the slave terminal 21₂ and the master terminal 1 based on the Beacon Response C11, a Scan Request is provided from the upper layers 215 to the MAC layer 212 of the slave terminal 21₂ at timing when time measured with the timer 2c of the slave terminal 21₂ reaches the waiting time Tr1. In this case, the communicator 2a of the slave terminal 21₂ constructs a communication route to the master terminal 1 by transmitting and receiving a Beacon Request and a Beacon Reply like the slave terminal 22₂.

Each slave terminal 2 (e.g., timer 2c or controller 2d) may be configured to extend the waiting time by a predetermined time if receiving, during the waiting time from a start-up time point of the slave terminal 2, a Beacon Request that is broadcast from at least one other slave terminal 2 which newly enters the network. In the example of FIG. 7, the slave terminal 21₂ extends the waiting time Tr1 by a predetermined time (an extended time Tr11) because it receives, during the waiting time Tr1 from a start-up time point of the slave terminal 21₂, the Beacon Request B11 that has been broadcast from the slave terminal 22₂ which newly enters the network. In this case, the communicator 2a of the slave terminal 21₂ can receive a Beacon Reply caused by another slave terminal 2 during the extended waiting time (Tr1 + Tr11) with high probability. It is therefore possible to raise a possibility that a communication route can be constructed between the slave terminal 21₂ and the master terminal 1 without transmission of any Beacon Request by the slave terminal 21₂.

In an example, each slave terminal 2 (e.g., timer 2c or controller 2d) is configured to more extend the extended time as the number of Beacon Requests that have been received during a waiting time is larger. In the example of FIG. 7, the slave terminal 21₂ more extends the extended time Tr11 as the number of Beacon Requests that have been received during the waiting time Tr1 is larger. In this case, the communicator 2a of the slave terminal 21₂ can receive a Beacon Reply caused by another slave terminal 2 which newly enters the network with higher probability as the number of Beacon Requests that have been received is larger. It is therefore possible to raise a possibility that a communication route can be constructed between the slave terminal 21₂ and the master terminal 1 without transmission of any Beacon Request by the slave terminal 21₂.

As stated above, the slave terminal 21₂ (e.g., communicator 2a or controller 2d) can further suppress the increase in communication traffic caused by communication for establishing communication routes when two or more slave terminals 2 newly enter the network N1, by extending the waiting time Tr1.

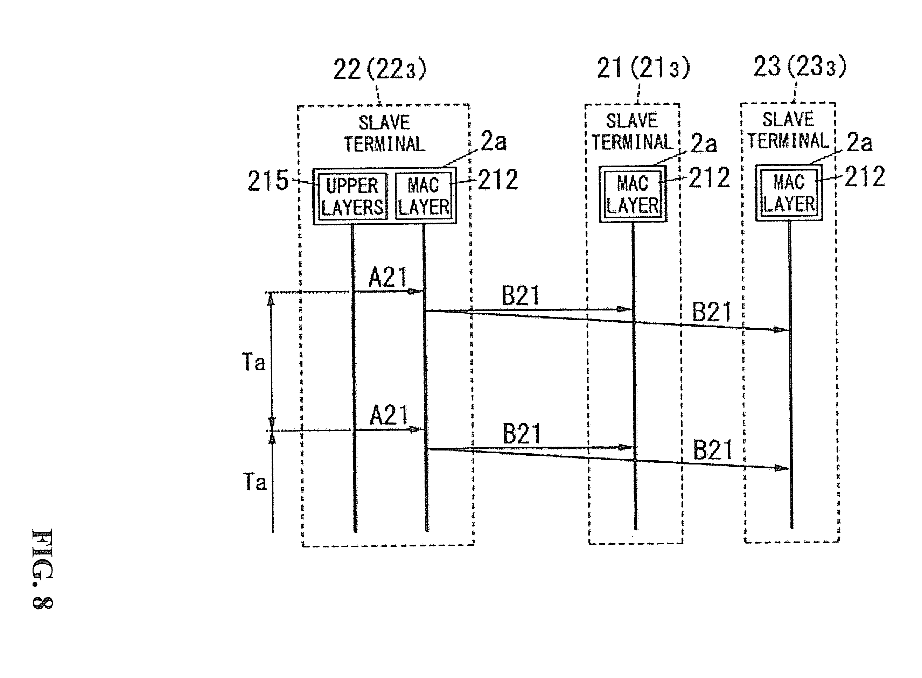

A communicator 2a of each slave terminal 2 may be configured so that it constructs a communication route between the slave terminal 2 and the master terminal 1 to enter the network and then a Scan Request is provided from upper layers 215 to a MAC layer 212 of the slave terminal 2 at regular intervals and thereby a Beacon Request is broadcast at regular intervals. In this configuration, the communicator 2a of the slave terminal 2 can renew the communication route in response to a change in communication environment. For example, as shown in FIG. 8, in a communicator 2a of a slave terminal 22₃ after entering the network N1, a Scan Request A21 is provided from upper layers 215 to a MAC layer 212 of the slave terminal 22₃ at regular intervals Ta. If the MAC layer 212 receives the Scan Request A21, the communicator 2a of the slave terminal 22₃ broadcasts a Beacon Request B21 over the electric power line W1 at regular intervals Ta. In FIG. 8, upper layers of each of the slave terminals 21 and 23 are omitted.

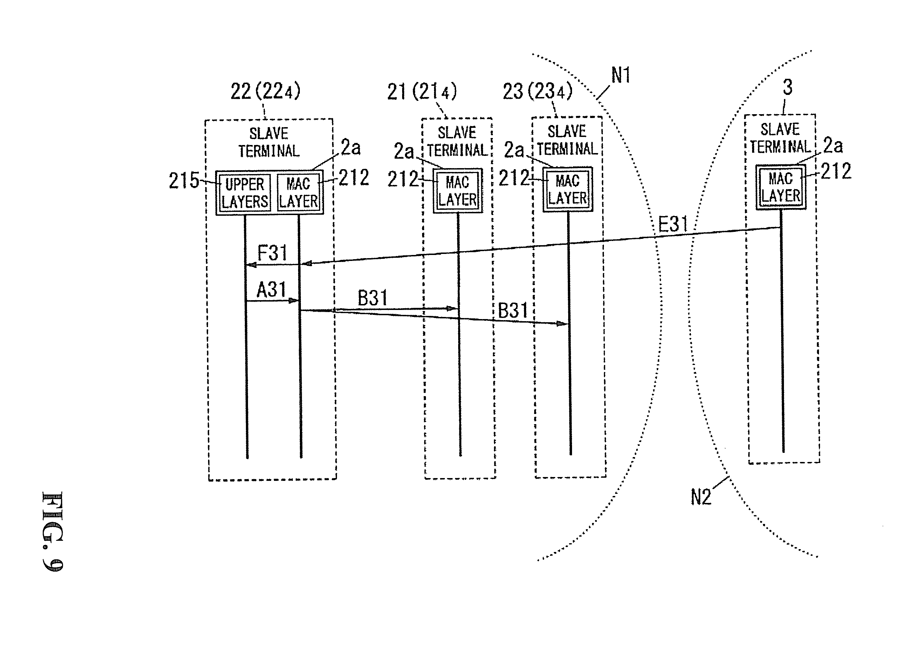

In an embodiment, a communicator 2a of each slave terminal 2 is configured, after entering the network N1 by constructing a communication route between the slave terminal 2 and the master terminal 1, so that only when it detects a signal containing an identifier (a network ID) that is different from the network N1 which the slave terminal 2 has entered, a Scan Request is further provided from upper layers 215 to a MAC layer 212 thereof. As shown in an example of FIG. 9, in a communicator 2a of a slave terminal 22(22₄) after entering a first network N1, when it detects a Scan Request E31 transmitted via broadband from a slave terminal 3 in a second network N2 that is different from the first network N1, Sync-Loss. indication depicted by F31 is provided from a MAC layer 212 to upper layers 215 of the slave terminal 22₄. Thus, only when a signal E31 from another network N2 different from the network N1 which the slave terminal 22₄ has entered is detected, the MAC layer 212 of the slave terminal 22₄ provides Sync-Loss. indication depicted by F31 to the upper layers 215 thereof. The upper layers 215 of the slave terminal 22₄ then provides a Scan Request A3 to the MAC layer thereof and thereby the communicator 2a of the slave terminal 22₄ broadcasts a Beacon Request B31 over the electric power line W1. In FIG. 9, upper layers of each of the slave terminals 21, 23 and 3 are omitted.

In an embodiment, each of the communicator 1a of the master terminal 1 and the communicators 2a of the slave terminals 2 is configured to calculate value of communication quality related to strength of a received signal of a Beacon Request (see B1 and B11) and to add data containing the calculated value of communication quality to a Beacon Reply (see C1 and C11). In this embodiment, when receiving the Beacon Reply (C1 and C11) to which the data containing the value of communication quality is added, the communicator 2a of the slave terminal 2 can determine communication quality about a communication link with a transmission source of the Beacon Reply. As a result, a communication route having better communication quality can be constructed. As an example of this embodiment, the comnunicator 2a of the slave terminal 2 may be configured to add information about the calculated value of communication quality to a next Beacon Request. In this example, when receiving the Beacon Request to which data containing the value of communication quality is added, the communicator 1a of the master terminal 1 or the communicator 2a of the slave terminal 2 can determine communication quality about the communication link with the transmission source of the Beacon Request. As a result, the communication route having better communication quality can be constructed.

The value of communication quality is related to the strength of the received signal, but may be related to another element such as SN ratio, EVM (Error Vector Magnitude), Bit Error Rate or Packet Error Rate, in place of the strength of the received signal.

In an embodiment, each slave terminal 2 (e.g., timer 2c or controller 2d) is configured, when newly entering the network N1, to extend the waiting time when receiving, during the waiting time from a start-up time point thereof, a Beacon Reply to a Beacon Request from at least one slave terminal 2 which newly enters the network. For example, in a communication sequence of FIG. 7, the slave terminal 21₂ (e.g., comnunicator 2a or controller 2d) extends the waiting time Tr1 by the predetermined time (the extended time Tr11) when receiving the Beacon Reply C11 caused by another slave terminal 22₂ which newly enters the network, during the waiting time Tr1 from a start-up time point thereof. In this case, the communicator 2a of the slave terminal 21₂ can receive a Beacon Reply caused by another slave terminal 2 which newly enters the network, during the extended waiting time (Tr1 + Tr11) with high possibility. It is possible to raise a possibility that the communication route between the slave terminal 21₂ and the master terminal 1 can be constructed without transmission of any Beacon Request from the slave terminal 21₂.

Each slave terminal 2 (e.g., timer 2c or controller 2d) may be configured to more extend the extended time of the waiting time as the number of Beacon Replies that have been received during the waiting time is larger. For example, in the communication sequence of FIG. 7, the slave terminal 21₂ (e.g., communicator 2a or controller 2d) more extends the extended time Tr11 as the number of Beacon Replies that have been received during the waiting time Tr1. In this case, the communicator 2a of the slave terminal 21₂ can receive a Beacon Reply caused by another slave terminal 2 which newly enters the network, with higher probability as the number of Beacon Replies that have been received is larger. The communicator 2a of the slave terminal 21₂ can raise a possibility that the communication route between the slave terminal 21₂ and the master terminal 1 can be constructed without transmission of any Beacon Request from the slave terminal 21₂.

As state above, by extending the waiting time Tr1, the slave terminal 21₂ (e.g., communicator 2a or controller 2d) can further suppress the increase in communication traffic caused by communication for establishing communication routes when two or more slave terminals 2 newly enter the network.

In the embodiments, electricity is exemplified as utility, a consumption amount of which is a target to be measured. However, the utility, the consumption amount of which is a target to be measured, may be gas, water, heat or the like except for electricity.

## Claims

1. A power line carrier communication terminal, comprising a communicator configured to perform power line carrier communication based on ITU-T G. 9903, in accordance with G3-PLC that is a communication protocol for power line carrier communication, wherein
the communicator includes a MAC layer and upper layers, and
the communicator is configured, when the power line carrier communication terminal newly enters a network, so that the MAC layer provides reception of a Beacon Reply to the upper layers if the communicator receives the Beacon Reply to a Beacon Request from at least one power line carrier communication terminal which newly enters the network and includes the power line carrier communication terminal of the communicator.

2. The power line carrier communication terminal of claim 1, wherein the communicator is configured
to broadcast a Beacon Request when the MAC layer receives a Scan Request from the upper layers in a case where the power line carrier communication terminal of the communicator newly enters the network, and
to broadcast a Beacon Reply when receiving a Beacon Request from at least one other power line carrier communication terminal which newly enters the network in a case where the power line carrier communication terminal of the communicator has already entered the network.

3. The power line carrier communication terminal of claim 2, further comprising a timer configured to measure a waiting time, a time length of which is set at random, wherein
the communicator is configured, when the power line carrier communication terminal of the communicator newly enters the network, so that the upper layers provide the MAC layer with the Scan Request at a timing that the waiting time elapses from a start-up time point thereof.

4. The power line carrier communication terminal of claim 3, wherein the power line carrier communication terminal is configured, when newly entering the network, to extend the waiting time if receiving the Beacon Request from the at least one other power line carrier communication terminal which newly enters the network, during the waiting time from the start-up time point.

5. The communication terminal of claim 4, wherein the communication terminal is configured to more extend an extended time of the waiting time as a number of Beacon Requests that have been received during the waiting time is larger.

6. The power line carrier communication terminal of claim 3, wherein the power line carrier communication terminal is configured, when newly entering the network, to extend the waiting time if receiving a Beacon Reply to a Beacon Request during the waiting time from the start-up time from the at least one power line carrier comnunication terminal which newly enters the network.

7. The power line carrier communication terminal of claim 6, wherein the power line carrier communication terminal is configured to more extend an extended time of the waiting time as a number of Beacon Replies that have been received during the waiting time is larger.

8. The power line carrier communication terminal of any one of claims 1 to 7, wherein the communicator is configured, after the power line carrier communication terminal of the communicator enters the network, so that the upper layers provide the MAC layer with a Scan Request at regular intervals.

9. The power line carrier comnunication terminal of any one of claims 1 to 7, wherein the communicator is configured, after the power line carrier communication terminal of the communicator enters the network, so that the upper layers further provide the MAC layer with a Scan Request only when the communicator detects a signal containing an identifier that is different from the network which the power line carrier communication terminal of the communicator has entered.

10. A meter reading terminal, comprising
a meter configured to produce meter reading information that represents a consumption amount of utility supplied to a consumer facility from a public utility, and
a communicator configured to perform power line carrier communication based on ITU-T G. 9903, in accordance with G3-PLC that is a communication protocol for power line carrier communication and thereby to transmit the meter reading information, wherein
the communicator includes a MAC layer and upper layers, and
the comnunicator is configured, when the meter reading terminal newly enters a network, so that the MAC layer provides reception of a Beacon Reply to the upper layers if receiving the Beacon Reply to a Beacon Request from at least one meter reading terminal which newly enters the network and includes the meter reading terminal of the communicator.
